# EUROPEAN PATENT SPECIFICATION

(11) **EP 3 863 468 B1**
(45) Date of publication and mention of the grant of the patent: **31.01.2024**
(21) Application number: 19774114.3
(22) Date of filing: 30.09.2019
(51) Int. Cl.: A45D 44/00

(54) **HAIR SHAPE CARD AND METHOD**
HAARFORMKARTE UND VERFAHREN
CARTE DE FORME CAPILLAIRE ET PROCÉDÉ

(30) Priority: 11.10.2018 EP 18199861
(43) Date of publication of application: 18.08.2021
(73) Proprietor: UNILEVER GLOBAL IP LIMITED, Wirral Merseyside CH62 4ZD (GB); Unilever IP Holdings B.V., 3013 AL Rotterdam (NL)
(72) Inventor: BATES, Kieran, William, Wirral Merseyside CH63 3JW (GB); IFTIKHAR, Abid, Wirral Merseyside CH63 3JW (GB); MCKEOWN, Robert, Wirral Merseyside CH63 3JW (GB)
(74) Representative: Mathai, Neenu Grace
(86) International application number: PCT/EP2019/076489
(87) International publication number: WO 2020/074307

(56) References cited:
- WO-A1-01/05266
- WO-A1-2017/072009
- FR-A1- 2 867 678

## Description

### FIELD OF THE INVENTION

The present invention relates to a shape card and a method for the self-assessment of the shape of hair, particularly of human hair.

### BACKGROUND OF THE INVENTION

Consumers today are exposed to a high volume of hair products, covering various categories such as shampoos, conditioners, treatments, and styling products. A brand may produce multiple versions of a product targeting needs of given hair shapes. For example, there are hair shampoos for straight hair, slightly straight hair, wavy hair, and curly hair.

Despite the clear marketing message on a hair product for its targeted consumers, there are no reliable means and/or methods for consumers to accurately identify what hair shape they have. Most consumers judge their hair shapes based upon selfperception. Such perfection may be inaccurate particularly if it is influenced by external factors such as advertising, comparisons with relatives and friends. For example, a consumer may think he/she has straight hair whilst a hair product manufacturer or a hair expert in salon may classify his/her hair as slightly wavy. Therefore, the vast array of products often leads to confusion. Consumers may easily assign themselves the wrong version of products wherein the ingredients target a different hair shape. The result is poor consumer satisfaction and/or lack of delivery of the desired result on hair

J. Cosmet. Sci., 60, 97-109 (March/April 2009) 'The behaviour of hair from different countries' describes assessments of properties of curly hair from different countries by using geometrical measurements from a laser scanning micrometer and a hair shape classification method. In addition, tensile tests, 2-D gel electrophoresis, and differential scanning calorimetry (DSC) were performed. The variability seen in hair characteristics may potentially influence how the hair responds to treatments and these differences could be caused by regional and cultural diversities in the population from where the hair originated.

'Proceedings of the International Symposium on Forensic Hair Comparisons' by FBI Academy Quantico, Virginia, June 25-29, 1985, pp147-148 describes `Precision of the average curvature measurement in human head hairs'. A modified method of the average curvature measurement of hair (Daniel Hardy, 1973) has been found useful in the forensic comparison of curly, human head hairs. The method involves measurements of a single, curly, Caucasian head hair by two examiners independently, each for 30 times. FR2867678 describes a shape card for the self-assessment of hair.

Despite the prior art, there remains a need to provide accurate yet simple means and/or methods for consumers to self-assess the shape of their hair. Therefore, a more accurate and more informed choice of hair products can be made by the consumers.

### SUMMARY OF THE INVENTION

In a first aspect of the present invention, there is provided a shape card for the self-assessment of the shape of hair, comprising a first part comprising one or more reference markers for assessing the number of hair waves; a second part comprising one or more reference markers for assessing hair curvature; and a third part comprising one or more descriptors each describing a specific hair shape, which is the resultant hair shape of a combination of one reference marker from the first part and one reference marker from the second part.

In a second aspect of the present invention, there is provided a product packaging for a hair care composition comprising the shape card according to the first aspect of the invention.

In a third aspect of the present invention, there is provided a kit comprising the shape card according to the first aspect of the invention, and a hair care composition.

In a fourth aspect of the present invention, there is provided a method for the self-assessment of the shape of hair, using the shape card according to the first aspect of the invention, comprising steps in sequence of: i) providing at least one sample hair; ii) comparing the shape of the sample hair to the reference markers provided in the first part of the shape card; iii) selecting the closest reference marker to the shape of the sample hair from the first part of the shape card; iv) comparing the shape of the sample hair to the reference markers provided in the second part of the shape card; v) selecting the closest reference marker to the shape of the sample hair from the second part of the shape card; vi) using the selected reference markers from steps iii) and v) and identifying the hair shape from the descriptors provided for the selected reference markers in the third part of the shape card.

Herein, the hair or sample hair is preferably a human hair. More preferably, the hair or sample hair is a single, human hair fibre.

An objective of the present invention is to provide a means and/or a method for simple, accurate self-assessment of the shape of a consumer's own hair or the assessment of another person's hair. A relevant objective of the present invention is to enable a consumer to make accurate and informed selection of a hair product.

The means and/or method is reliable, easily-usable and not involving any expert judgements and/or laboratory measurements. The means and/or method also does not rely on the consumer's discernment. The selection of a hair product may follow the assessment of hair shape automatically, in a manner which requires minimal human input, and the scheme of provision for which does not vary from consumer to consumer.

These and other aspects, features and advantages will become apparent to those of ordinary skill in the art from a reading of the following detailed description and the appended claims.

Surprisingly, it has been found that a shape card comprising three parts can be used with ease to enable consumer self-assessment of their hair shape. The shape card can be included as part of a hair product packaging, preferably detachable from said packaging. It can also be included as part of a hair kit wherein said kit comprises a hair care composition.

### DETAILED DESCRIPTION OF THE INVENTION

Herein, any feature stated as 'preferred' in one aspect of the invention should be understood to be a preferred feature in the other aspect of the invention. Any feature described as 'preferred' should be understood to be particularly preferred in combination with a further preferred feature or features.

Herein, any feature of a particular embodiment of the present invention may be utilized in any other embodiment of the invention.

The word 'comprising' is intended to mean 'including' but not necessarily 'consisting of' or 'composed of'. The examples given in the description below are intended to clarify the invention but not to limit the invention. All weight percentages (wt%) are based upon the final weight of the composition unless indicated otherwise. Numerical ranges expressed in the format 'x-y' are understood to include x and y, unless specified otherwise. The numbers can be qualified by the term 'about'. When for a specific feature multiple preferred ranges are described in the format 'from x to y', it is understood that all ranges combining the different endpoints are also contemplated.

### The Shape Card

Herein, the shape card refers to the substrate suitable for use in the assessment of the shape of hair, particularly of human hair. The card is preferably made of paper, cardboard, pasteboard, plastic or the card can be a virtual card.

The shape card according to the invention essentially comprises three parts.

The shape card comprises a first part comprising one or more reference markers for assessing the number of hair waves. Preferably, the markers are a series of drawings of hair, each drawing having a different number of hair waves. More preferably, the series of drawings are arranged in a way that the number of hair waves is in descending or ascending order. This facilitates the consumer to compare and select the appropriate reference marker with a hair sample.

Herein, 'drawing' refers to a picture or an illustration of hair as such. Preferably, each drawing comprises a single hair fibre having a different number of hair waves. More preferably, each drawing is a 2D image of a single hair fibre having a different number of hair waves. In less preferred yet possible embodiments, the drawing can be a 3D model hair, for example, a model hair rendered by layers of varnish. The model may also include virtual model.

The number of hair waves of a single hair fibre in the drawing is typically an integer n, wherein n is at least zero (no waves).

Preferably, the single hair fibre comprised in the drawing is at least 6 cm long. More preferably, the single hair fibre from each drawing is at least 6 cm long and of equal length to each other. This provides a more accurate reference of the hair waves and reduces the difficulty of selecting the closest reference marker with a hair sample, i.e. short and/or unequal length of hair can be difficult to compare and can lead to misrepresentation of hair shape.

Preferably, the reference marker in the first part comprises an indicator. The indicator can be that amongst things referring to a letter, a number, a text, or a symbol. The indicator can also be a colour that applies to the reference marker. Preferably, each reference marker in the first part comprises an indicator. The indicators are preferably different from each other. The use of indicators helps the consumers to remember their selected hair waves and hence simplifies the identification of the hair shape.

The first part may additionally comprise a means for measuring out the length of hair. The length of the means is preferably at least 6cm. The means may take the form of a ruler, a straight line or a rectangle or other polygon. For example, the means can be a rectangular box, preferably having a length of at least 6 cm. By comparing to the means, a consumer can section out at least 6 cm of his/her hair before comparing with the reference markers in the first part of the shape card.

The shape card also comprises a second part comprising one or more reference markers for assessing the curvature of hair. Preferably, the reference markers of the second part comprise a series of lines with different curvatures. Preferably, the reference markers are arranged in either ascending or descending order based on its curvature. It is to ease the selection of the appropriate curvature with a hair sample.

In a preferred embodiment, the reference marker forms a circle or part of a circle. The arrangement is such that the radius of one reference marker is different from the radius of another reference marker in the second part.

Preferably, the reference marker in the second part comprises an indicator. The indicator can be a letter, a number, a text, a colour, or a symbol. Preferably all indicators of the second part are located at one dimension. Preferably, each reference marker in the second part comprises an indicator. The indicators are preferably different from each other. Consequently, such indicators help the consumer to remember the curve of the hair and simplify further identification of the hair shape. Preferably, each curvature is assigned a different indicator. However, it is also possible for several curvatures to share one common indicator. For example, if a group of curvatures are parts of circles of similar radius, a common number '0' may be assigned to all of them.

Preferably, the indicators used in the second part are different from the indicators used in the first part. For example, if letters (A, B, C, D, etc) are used in the first part, numbers can be used in the second part (0,1, 2, 3, *etc*). It is also preferred not to use identical indicator within each part of the shape card.

The shape card comprises a third part comprising one or more descriptors, each describing a specific hair shape, which is the resultant hair shape of a combination of one reference marker from the first part and one reference marker from the second part. Herein, the specific hair shape can be selected from straight hair, fairly straight hair, wavy hair, slightly wavy hair, curly hair, slightly curly hair, frizzy hair or slightly frizzy hair.

From the paragraph above, each descriptor in the third part will be associated with one reference marker of the first part and one reference marker of the second part. The descriptors are arranged in a way that once one reference marker is selected from the first part in combination with one selected reference marker from the second part, such resultant combination can only lead to one specific descriptor of the third part. For example, once certain reference marker for hair wave is selected from the first part and certain reference marker for hair curvature is selected from the second part, the resultant descriptor of the hair shape can be certain, such as a `straight hair'. No other hair shape may arise.

Preferably, the descriptors in the third part are arranged in the form of a matrix. Additionally, and optionally, the descriptors can be in the form of patterns, letters, texts, numbers, symbols, or mixtures thereof.

Optionally, the third part may comprise indicators of the reference markers from the first and second parts. The indicators for the reference markers from the first part may be arranged at one dimension of the third part whilst the indicators for the reference markers from the second part may be arranged at another dimension of the third part. Within each dimension, the indicators may be arranged in ascending or descending order.

The descriptors of the third part may be coloured. Preferably for each descriptor, a different colour is used. For instance, green may be used for `straight hair', light green may be used for 'fairly straight hair' and red may be used for 'frizzy hair'.

Advantageously, there is no need for the shape card to include any kind of attachment portions or adhesive regions. There is also no requirement for securing hair on a surface or sandwiching a hair between any surfaces before and during the measurement. As such, the present invention avoids distortion of the curves and/or waves of a given hair, as well as the complexity during operation.

### The product packaging and the kit

In a second aspect there is provided a product packaging for a hair care composition comprising the shape card according to the first aspect of the invention. Preferably, the packaging is a container such as a bottle or tottle. Preferably, the packaging is secondary packing for a container. Such secondary packaging is typically a carton or blister pack and the shape card may be part of the carton or blister. Preferably, the shape card is detachable from said packaging.

In a third aspect there is provided a kit comprising the shape card according to the first aspect and a hair care composition. Preferably, the hair care composition is selected from shampoos, rinse-off conditioners, leave-on conditioners, overnight treatments, hair masks, mousses, gels, sprays, serums or styling compositions. The kit may also comprise instructions for use. The instructions for use may be for the application of hair compositions and/or the use of the shape card. The former teaches the consumers the correct way of using the composition. The latter teaches the consumer the correct way of identifying their hair shape by using the shape card. Overall, the kit according to the invention can improve the consumer satisfaction.

### The Method

In a fourth aspect of the invention, there is provided a method for the self-assessment of the shape of hair, using the shape card according to the first aspect, comprising steps in sequence of:
i) Providing at least one sample hair;
ii) Comparing the shape of the sample hair to the reference markers provided in the first part of the shape card;
iii) Selecting the closest reference marker to the shape of the sample hair from the first part of the shape card;
iv) Comparing the shape of the sample hair to the reference markers provided in the second part of the shape card;
v) Selecting the closest reference marker to the shape of the sample hair from the second part of the shape card;
vi) Using the selected reference markers from steps iii) and v) and identifying the hair shape from the descriptors provided for the selected reference markers in the third part of the shape card.
the sample hair provided is a human hair fibre. The fibre can be taken from any part of a consumer's hair. The sample hair provided is at least 6cm long, preferably 6cm. The sample hair is compared tothe reference markers provided in the first part of the shape card. In a preferred embodiment, the reference markers of the first part are a series of drawings each comprising a single hair fibre of at least 6cm long. The first part optionally comprises a means for measuring out the length of hair and the length of the means is at least 6cm, preferably 6cm. A consumer can measure out at least 6cm of hair fibre according to the length of the means. During the measurement, the hair is preferably pulled taut. The hair is then allowed to relax prior to the comparison to the reference markers of the first part.

The step of comparing the shape of the sample hair to the reference markers in the first part may be done by simply placing the hair against each of the reference markers. Accordingly, at step iii), the reference marker with the number of the hair waves that is the closest to the number of waves presented from the sample hair is selected.

Preferably before step iv), all waves of the hair are first identified, and the biggest wave is selected. It is beneficial to the identification of hair curvature because the big wave is representative whilst a small wave can be random. The biggest wave is then compared to the reference markers provided in the second part. The comparison at step iv) can be done in such a way that the hair is moved along reference markers in the second part until the closest fit between the curvature from the sample hair and that from the reference marker is found. At step v), the reference mark with the closest fit is selected. Typically, the hair is at its relaxed status during the comparison, that is to say, the hair is not pulled taut.

At step vi), a consumer can use the reference markers selected from steps iii) and v) to identify the descriptor of the relevant hair shape. The descriptors are arranged in a way that once one reference marker is selected from the first part at step iii) and another reference marker is selected from the second part at step v), the resultant combination can only lead the consumer to one specific descriptor of the third part.

Preferably the hair used in the method according to the present invention is at its natural status. By 'natural status' is meant the hair selected from a consumer's head can be used without any treatment such as heat, chemical, etc.

Preferably, the method further comprises making a product recommendation based on the identified hair shape by self-assessment. For example, should the consumer assess his/her hair is slightly curly then the recommendation might be a hair care composition suitable for slightly curly hair.

In this way, the claimed shape card provides a simple yet accurate way for quantitative and qualitative self -assessment of the hair shape. By taking the actual measurements, the consumer is likely to correctly identify their hair type. As a result, based on this identification, they are more likely to choose the optimal product for their hair as errors from random comparison can be prevented. The likelihood of consumer satisfaction is therefore increased.

Clearly, the shape card is also suitable for use in a method of assessing effect on hair shape of a hair care composition. The method comprises steps of application of a hair composition to a consumer's head and the subsequent use of the method according to the fourth aspect of the present invention.

### Brief Description of The Figures

Embodiments of the invention will now be described with reference to the following non-limiting figures, in which:
Figure 1 shows a plan view of a means for measuring out the length of hair being used;
Figure 2 shows a plan view of a series of reference markers provided in the first part;
Figure 3 shows the biggest wave of a hair fibre being identified;
Figure 4 shows a comparison of the biggest wave of a hair fibre to the reference markers provided in the second part;
Figure 5 shows a schematic diagram of a third part of a shape card;

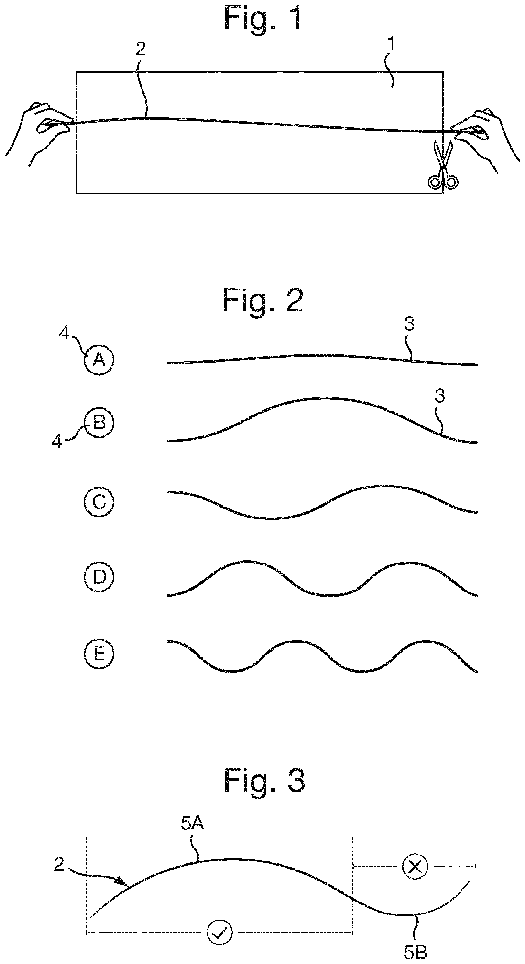

In detail, figure 1 shows a means for measuring out the length of hair which is a rectangular box (1). The length of the rectangular box (1) is 6cm. A hair fibre (2) is pulled taut and cut to fit the length of the rectangular box (1).

Figure 2 shows a series of reference markers which comprises a series of drawings of 2D hair images (3) and indicators (4). The hair images (3) each has a different number of hair waves and are arranged in ascending order. Indicators (4) are a series of letters corresponding to the images (3).

Figure 3 shows the identification of the biggest wave (5A) on the hair fibre (2). The big wave (5A) is being labelled with a 'tick' whilst a small wave (5B) is labelled with a 'cross'.

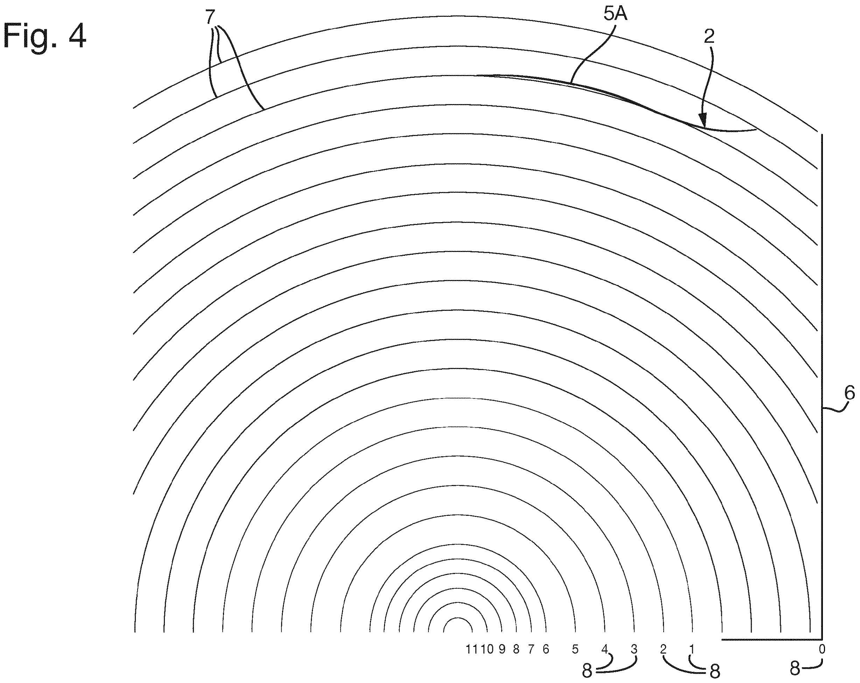

Figure 4 shows a comparison of the biggest wave (5A) of the hair fibre (2) to the reference markers (6) provided in the second part. The reference markers (6) comprise a series of lines with different curvatures (7). The markers (6) further comprise a series of indicators which are numbers (8) located at one dimension.

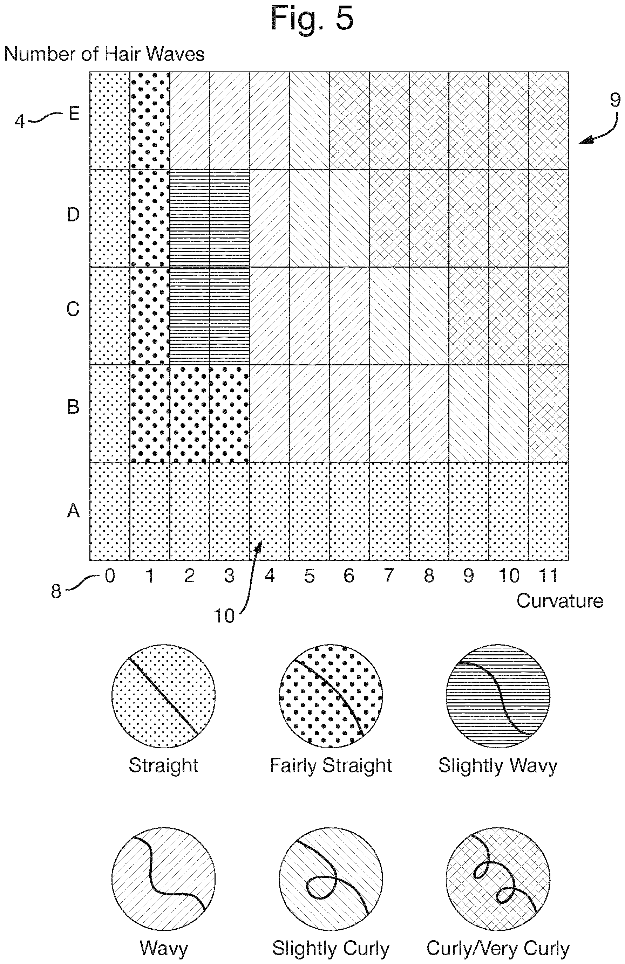

Figure 5 shows a schematic diagram of a third part (9) of a shape card. The third part (9) comprises Y-axis denoting the reference markers from the first part and X-axis denoting the reference markers from the second part. Y-axis comprises indicators (4) identical to those (4) used in figure 2 (first part) and X-axis comprises indicators (8) identical to those (8) used in figure 4(second part). The third part (9) further comprises descriptors for hair shape (10). Each descriptor (10) is for a specific hair shape. The diagram of the third part is sectioned so that once a certain letter of the number of hair waves and a certain number of the hair curvature are selected, the resultant combination is a certain descriptor for hair shape (10).

## Claims

1. A shape card for the self-assessment of the shape of hair (2), comprising:
a first part comprising one or more reference markers (4) for assessing the number of hair waves;
a second part comprising one or more reference markers (6) for assessing hair curvature; **characterised in that** the shape card comprises
a third part (9) comprising one or more descriptors (10) each describing a specific hair shape, which is the resultant hair shape of a combination of one reference marker from the first part (4) and one reference marker (6) from the second part.

2. A shape card according to claim 1, wherein the reference markers (4) of the first part comprise a series of drawings of hair, each drawing having a different number of waves.

3. A shape card according to claim 1 or 2, wherein the reference markers (6) of the second part comprise a series of lines with different curvatures.

4. A shape card according to claim 1, 2 or 3, wherein the reference markers (6) of the second part are used to measure the biggest wave (5A) on the hair (2).

5. A shape card according to any of the preceding claims, wherein the reference marker comprises an indicator.

6. A shape card according to claim 5, wherein the indicator of each reference marker is different from the other.

7. A shape card according to any of the preceding claims, wherein the hair (2) is human hair.

8. A product packaging for a hair care composition comprising the shape card according to any of the preceding claims.

9. A product packaging according to claim 8, wherein the shape card is detachable from said packaging.

10. A kit comprising the shape card according to any of the claims 1-7, and a hair care composition.

11. A kit according to claim 10, additionally comprising instructions for use.

12. A method for the self-assessment of the shape of hair (2), using the shape card according to any of the preceding claims 1-6, comprising steps in sequence of:
i) Providing at least one sample hair;
ii) Comparing the shape of the sample hair to the reference markers (4) provided in the first part of the shape card;
iii) Selecting the closest reference marker to the shape of the sample hair from the first part of the shape card;
iv) Comparing the shape of the sample hair to the reference markers (6) provided in the second part of the shape card;
v) Selecting the closest reference marker to the shape of the sample hair from the second part of the shape card; **characterised in that** the method comprises
vi) Using the selected reference markers from steps iii) and v) and identifying the hair shape from the descriptors (10) provided for the selected reference markers in the third part of the shape card.

13. A method according to claim 12, wherein the hair (2) is at least 6 cm long.

## Patentansprüche

1. Formkarte für die Selbstbeurteilung der Haarform (2), die Folgendes umfasst:
einen ersten Teil, der eine oder mehrere Referenzmarkierungen (4) zum Beurteilen der Zahl von Haarwellen umfasst;
einen zweiten Teil, der eine oder mehrere Referenzmarkierungen (6) zum Beurteilen der Haarkrümmung umfasst; **dadurch gekennzeichnet, dass** die Formkarte Folgendes umfasst:
einen dritten Teil (9), der einen oder mehrere Deskriptoren (10) umfasst, die jeweils eine spezifische Haarform beschreiben, die der resultierenden Haarform aus einer Kombination aus einer Referenzmarkierung (4) von dem ersten Teil und einer Referenzmarkierung (6) von dem zweiten Teil entspricht.

2. Formkarte nach Anspruch 1, wobei die Referenzmarkierungen (4) des ersten Teils eine Reihe von Zeichnungen von Haar umfassen, wobei jede Zeichnung eine unterschiedliche Zahl von Wellen aufweist.

3. Formkarte nach Anspruch 1 oder 2, wobei die Referenzmarkierungen (6) des zweiten Teils eine Reihe von Linien mit unterschiedlichen Krümmungen umfassen.

4. Formkarte nach Anspruch 1, 2 oder 3, wobei die Referenzmarkierungen (6) des zweiten Teils verwendet werden, um die größte Welle (5A) auf dem Haar (2) zu messen.

5. Formkarte nach einem der vorhergehenden Ansprüche, wobei die Referenzmarkierung einen Indikator umfasst.

6. Formkarte nach Anspruch 5, wobei sich der Indikator jeder Referenzmarkierung von den anderen unterscheidet.

7. Formkarte nach einem der vorhergehenden Ansprüche, wobei das Haar (2) ein Menschenhaar ist.

8. Produktverpackung für eine Haarpflege-Zusammensetzung, die die Formkarte nach einem der vorhergehenden Ansprüche umfasst.

9. Produktverpackung nach Anspruch 8, wobei die Formkarte von der Verpackung abgenommen werden kann.

10. Packung, die die Formkarte nach einem der Ansprüche 1-7 und eine Haarpflege-Zusammensetzung umfasst.

11. Packung nach Anspruch 10, die zusätzlich eine Gebrauchsanweisung umfasst.

12. Verfahren zur Selbstbeurteilung der Form des Haars (2) unter Verwendung der Formkarte nach einem der Ansprüche 1-6, das die folgenden aufeinanderfolgenden Schritte umfasst:
i) Bereitstellen mindestens eines Probehaars;
ii) Vergleichen der Form des Probehaars mit den Referenzmarkierungen (4), die in dem ersten Teil der Formkarte vorgesehen sind;
iii) Auswählen der Referenzmarkierung, die der Form des Probehaars am nächsten ist, aus dem ersten Teil der Formkarte;
iv) Vergleichen der Form des Probehaars mit den Referenzmarkierungen (6), die in dem zweiten Teil der Formkarte vorgesehen sind;
v) Auswählen der Referenzmarkierung, die der Form des Probehaars am nächsten ist, aus dem zweiten Teil der Formkarte; **dadurch gekennzeichnet, dass** das Verfahren Folgendes umfasst:
vi) Verwenden der Referenzmarkierungen aus den Schritten iii) und v) und Identifizieren der Haarform aus den Deskriptoren (10), die für die ausgewählten Referenzmarkierungen in dem dritten Teil der Formkarte vorgesehen sind.

13. Verfahren nach Anspruch 12, wobei das Haar (2) mindestens 6 cm lang ist.

## Revendications

1. Carte de forme pour l'auto-évaluation de la forme des cheveux (2), comprenant:
une première partie comprenant un ou plusieurs marqueurs de référence (4) pour évaluer le nombre d'ondulations de cheveux;
une deuxième partie comprenant un ou plusieurs marqueurs de référence (6) pour évaluer la courbure des cheveux; **caractérisée en ce que** la carte de forme comprend
une troisième partie (9) comprenant un ou plusieurs descripteurs (10) décrivant chacun une forme de cheveux spécifique, qui est la forme de cheveux résultante d'une combinaison d'un marqueur de référence provenant de la première partie (4) et d'un marqueur de référence (6) provenant de la deuxième partie.

2. Carte de forme selon la revendication 1, dans laquelle les marqueurs de référence (4) de la première partie comprennent une série de dessins de cheveux, chaque dessin ayant un nombre d'ondulations différent.

3. Carte de forme selon la revendication 1 ou 2, dans laquelle les marqueurs de référence (6) de la deuxième partie comprennent une série de lignes avec des courbures différentes.

4. Carte de forme selon la revendication 1, 2 ou 3, dans laquelle les marqueurs de référence (6) de la deuxième partie sont utilisés pour mesurer la plus grande ondulation (5A) sur les cheveux (2).

5. Carte de forme selon l'une quelconque des revendications précédentes, dans laquelle le marqueur de référence comprend un indicateur.

6. Carte de forme selon la revendication 5, dans laquelle l'indicateur de chaque marqueur de référence est différent de l'autre.

7. Carte de forme selon l'une quelconque des revendications précédentes, dans laquelle les cheveux (2) sont des cheveux humains.

8. Emballage de produit pour une composition de soins capillaires comprenant la carte de forme selon l'une quelconque des revendications précédentes.

9. Emballage de produit selon la revendication 8, dans lequel la carte de forme est détachable dudit emballage.

10. Kit comprenant la carte de forme selon l'une quelconque des revendications 1 à 7, et une composition de soins capillaires.

11. Kit selon la revendication 10, comprenant en outre des instructions pour l'utilisation.

12. Procédé pour l'auto-évaluation de la forme des cheveux (2), utilisant la carte de forme selon l'une quelconque des revendications 1 à 6 précédentes, comprenant les étapes successives de:
i) fourniture d'au moins un échantillon de cheveux;
ii) comparaison de la forme de l'échantillon de cheveux aux marqueurs de référence (4) fournis dans la première partie de la carte de forme;
iii) sélection du marqueur de référence le plus proche de la forme de l'échantillon de cheveux d'après la première partie de la carte de forme;
iv) comparaison de la forme de l'échantillon de cheveux aux marqueurs de référence (6) fournis dans la deuxième partie de la carte de forme;
v) sélection du marqueur de référence le plus proche de la forme de l'échantillon de cheveux d'après la deuxième partie de la carte de forme; **caractérisé en ce que** le procédé comprend
vi) l'utilisation des marqueurs de référence sélectionnés aux étapes iii) et v) et l'identification de la forme des cheveux d'après les descripteurs (10) fournis pour les marqueurs de référence sélectionnés dans la troisième partie de la carte de forme.

13. Procédé selon la revendication 12, dans lequel les cheveux (2) mesurent au moins 6 cm de long.
